# NOUVEAU FASCICULE DE BREVET EUROPEEN

(11) **EP 2 548 624 B2**
(45) Date de publication et mention de la décision concernant l'opposition: **07.11.2018**
(45) Mention de la délivrance du brevet: 03.02.2016
(21) Numéro de dépôt: 12175361.0
(22) Date de dépôt: 06.07.2012
(51) Int. Cl.: B01D 36/00

(54) **Filtre à carburant avec compartiment inférieur de collecte d'eau et élément filtrant pour un tel filtre**
Kraftstofffilter mit unterem Auffangkasten für Wasser, und Filterelement für einen solchen Filter
Fuel filter with bottom compartment for collecting water and filtering element for such a filter

(30) Priorité: 21.07.2011 FR 1156631
(43) Date de publication de la demande: 23.01.2013
(73) Titulaire: FILTRAUTO, 78280 Guyancourt (FR)
(72) Inventeur: Girault, Emmanuel, 78280 GUYANCOURT (FR); Lalleman, Xavier, 94200 IVRY SUR SEINE (FR); Reperant, Romain, 95240 CORMEILLES EN PARISIS (FR); Vin, Sébastien, 78490 MERE (FR)
(74) Mandataire: Cabinet Plasseraud

(56) Documents cités:
- EP-A1- 1 932 574
- EP-A1- 2 283 906
- EP-A2- 2 415 508
- WO-A1-02/06662
- WO-A1-2011/107262
- US-A- 4 372 847
- US-A- 4 626 348

## Description

La présente invention est relative aux filtres à carburant, et en particulier aux filtres à gazole séparant l'eau contenue dans le carburant et comportant un compartiment inférieur pour collecter cette eau.

Plus particulièrement, l'invention concerne un filtre à carburant séparateur d'eau, comportant :
- un boîtier comprenant une paroi supérieure et une paroi inférieure présentant un fond, le boîtier délimitant un volume intérieur et présentant une entrée de carburant brut et une sortie de carburant filtré ;
- un élément filtrant disposé dans un compartiment supérieur du volume intérieur, l'élément filtrant comportant une extrémité supérieure, une extrémité inférieure et un média filtrant sensiblement annulaire s'étendant entre l'extrémité supérieure et l'extrémité inférieure, le média filtrant ayant une face interne qui délimite un espace intérieur ; et
- un support de fixation de l'élément filtrant, relié au boîtier.

Le document FR 2929858 décrit un exemple d'un tel filtre à carburant, en particulier à gazole, utilisé dans des véhicules à moteur à explosion (domaine automobile notamment). Dans ce filtre, l'élément filtrant forme une cartouche et est placé suffisamment à distance du fond (voir figure 4 de ce document) pour permettre une collecte de l'eau séparée. L'élément filtrant est monté de façon telle que le seul circuit possible pour le carburant de l'entrée à la sortie passe à travers le média filtrant, depuis un espace annulaire externe vers l'espace intérieur. L'eau est séparée du côté externe du média filtrant et les gouttes tombent sur le fond du boîtier.

Avec ce type de filtre, l'étanchéité entre la zone de carburant sale (en amont de la filtration) et la zone de carburant propre (en aval de la filtration) est obtenue par l'utilisation d'un flasque inférieur sans ouverture pour former l'extrémité inférieure de l'élément filtrant et un contact annulaire étanche au niveau d'une ouverture centrale du flasque supérieur de l'élément filtrant. Ce type d'agencement permet donc d'éviter l'utilisation de joints autour du flasque inférieur.

Cependant, pour garder l'efficacité de séparation d'eau il est souhaitable de séparer l'eau du carburant déjà filtré, ce qui n'est permis qu'en collectant cette eau en aval de la filtration, du côté de la zone de carburant propre. Si on veut conserver le sens de filtration (depuis la face externe vers la face interne du média filtrant), il faut alors prévoir une séparation de l'eau du côté de la face interne du média filtrant et un passage inférieur dans l'élément filtrant pour permettre l'écoulement de l'eau séparée vers le fond du boîtier.

Afin d'isoler la zone de carburant propre de la zone de carburant sale, il est nécessaire d'utiliser dans ce cas (contrairement au cas du filtre décrit dans le document FR 2929858) un élément filtrant avec un élément d'étanchéité supplémentaire en contact avec le boîtier. A titre d'exemple, un joint à lèvre peut être rapporté sur un flasque inférieur. Un inconvénient est alors que l'élément filtrant est plus complexe à fabriquer.

Le document WO 02/06662 montre ainsi un filtre à gazole, relativement compact, qui utilise un joint annulaire intercalé entre un épaulement interne du boîtier et une face axiale du flasque inférieur. Dans ce cas, le montage du joint est une opération délicate. De plus le joint est directement en contact avec le gazole à filtrer, ce qui peut altérer l'étanchéité.

Le document EP 1932574 décrit un dispositif de filtration de carburant avec deux éléments de filtration.

La présente invention vise à améliorer la situation.

A cet effet, il est proposé selon l'invention un filtre à carburant séparateur d'eau dans lequel le support de fixation de l'élément filtrant s'étend à distance du fond, de sorte à ménager un compartiment inférieur du volume intérieur dans lequel de l'eau séparée peut s'accumuler, un élément de séparation d'eau tel qu'une toile hydrophobe étant prévu du côté de la face interne ou sur un tube interne de l'élément filtrant et permettant de séparer l'eau dans l'espace intérieur, l'espace intérieur communiquant d'une part, du côté de l'extrémité inférieure de l'élément filtrant, avec le compartiment inférieur, et communiquant d'autre part, du côté de l'extrémité supérieure de l'élément filtrant, avec la sortie de carburant filtré ;
et dans lequel le support de fixation comporte une cloison solidaire du boîtier et qui permet de délimiter le compartiment inférieur par rapport au compartiment supérieur, la cloison comprenant un conduit central de communication entre l'espace intérieur et le compartiment inférieur, l'extrémité inférieure de l'élément filtrant étant raccordée de manière étanche audit support par un contact annulaire radial avec le conduit central de la cloison.

Grâce à cette compartimentation, il est permis de séparer de façon étanche la zone de décantation d'eau en fond de boîtier de la zone de carburant sale du filtre sans utiliser de joint technique, ce qui réduit le coût de l'élément filtrant. A titre d'exemple, le contact annulaire, peut être réalisé par une portion tubulaire qui fait saillie depuis la face inférieure du flasque inférieur de l'élément filtrant et vient s'engager par serrage plastique contre la face interne du conduit central.

De manière très avantageuse, cet agencement apporte en outre un renforcement du fond du boîtier, la cloison du support permettant de rigidifier le boîtier et de limiter la déformation du boitier sous l'effet de la pression (déformations en pulsations de pression). Les risques de casse sont donc minimisés et il est en outre permis de réduire l'épaisseur des parois du boîtier avec une telle cloison, de façon à minimiser l'encombrement externe du filtre.

La cloison est intégralement formée avec une pièce du boîtier distincte de la paroi inférieure. Ainsi la cloison et la paroi inférieure forment un double fond avec un gain en rigidité très significatif du côté du fond du boîtier.

Selon une autre particularité, le filtre comprend une cuve formant réservoir d'accumulation d'eau et un couvercle, la paroi supérieure appartenant au couvercle, l'entrée et la sortie étant formées dans le couvercle. Avec cette disposition, on limite l'encombrement du filtre et son installation dans un véhicule est rendue plus aisée.

De plus, le boîtier peut comporter :
- la cuve formant réservoir d'accumulation d'eau, qui présente ledit fond et une paroi annulaire qui s'étend vers le haut depuis le fond, le compartiment inférieur étant délimité entre le fond et la cloison ;
- un composant de boîtier qui s'étend autour de l'axe central entre des extrémités axiales ouvertes, respectivement supérieure et inférieure, ledit support de fixation de l'élément filtrant étant formée d'une seule pièce avec le composant de boîtier et définissant ladite extrémité axiale ouverte inférieure ;
- le couvercle qui est fixé à l'extrémité supérieure ouverte du composant de boîtier ; et
- un pilier interne de liaison entre le support et le fond, qui s'étend de façon annulaire dans le volume intérieur autour de l'axe central, de façon à délimiter un espace annulaire entre le boîtier et une face externe du pilier interne.

Ainsi la paroi inférieure peut appartenir à une cuve qui est soudée, par exemple par vibrations, ou surmoulée ou collée, au reste du boîtier. L'utilisation d'un pilier de liaison minimise les déformations. Avec cet agencement, on peut obtenir un cordon de soudure interne additionnel entre le fond du boîtier et la cloison du support de fixation, ce qui améliore significativement la rigidité. Ainsi, il est permis de réduire l'épaisseur des pièces composant le boîtier, en particulier la cuve. De plus, les rayons de courbure peuvent être réduits au niveau de la cuve, ce qui permet de limiter l'encombrement du filtre.

Dans divers modes de réalisation du filtre selon l'invention, on peut éventuellement avoir recours en outre à l'une et/ou à l'autre des dispositions suivante :
- l'élément filtrant est fixé de manière amovible dans le boîtier, le boîtier comprenant un couvercle qui présente des moyens de fixation amovible permettant de fermer de manière étanche le boîtier, les moyens de fixation présentant de préférence un filetage formé sur une portion inférieure du couvercle ;
- l'extrémité inférieure de l'élément filtrant présente une portion tubulaire d'étanchéité en contact étanche annulaire (contact radial) avec une face interne du conduit central de la cloison ;
- l'extrémité supérieure est constituée par un premier flasque et l'extrémité inférieure est constituée par un deuxième flasque, le média filtrant étant disposé entre le premier flasque et le deuxième flasque ;
- l'espace intérieur débouche en direction du fond au travers d'une ouverture du deuxième flasque ;
- le deuxième flasque comporte une portion radiale qui recouvre une extrémité inférieure du média filtrant et une projection annulaire qui fait saillie axialement vers le fond et s'engage de façon serrée dans le conduit central de la cloison ;

Par ailleurs, l'invention a également pour objet un élément filtrant formant cartouche filtrante et adapté pour coopérer dans un filtre selon l'invention.

A cet effet il est proposé un élément filtrant formant cartouche filtrante, adapté pour coopérer dans un filtre à carburant selon l'invention, l'élément filtrant comprenant :
- une extrémité supérieure sous la forme d'un premier flasque,
- une extrémité inférieure sous la forme d'un deuxième flasque,
- un média filtrant sensiblement annulaire s'étendant autour d'un axe central entre le premier flasque et le deuxième flasque, le média filtrant ayant une face interne qui délimite un espace intérieur,
- un élément de séparation d'eau tel qu'une toile hydrophobe prévu du côté de ladite face interne ou sur un tube interne de l'élément filtrant pour permettre de séparer l'eau du carburant à proximité de l'axe central,
et dans lequel le deuxième flasque comprend une ouverture formant un débouché inférieur de l'espace intérieur pour permettre un écoulement de l'eau séparée vers un compartiment inférieur, le premier flasque comprenant une ouverture formant un débouché supérieur de l'espace intérieur pour permettre d'évacuer le carburant filtré, le deuxième flasque présentant une portion radiale et une projection définissant un raccord tubulaire, le raccord tubulaire présentant une face externe sur laquelle un bourrelet annulaire fait saillie radialement vers l'extérieur pour réaliser un contact étanche avec le conduit central de la cloison.

Selon une particularité, la projection définissant le raccord tubulaire est cylindrique et fait saillie vers le bas depuis un bord interne de la portion radiale.

Selon une autre particularité, l'élément filtrant comprend un tube interne qui s'étend entre une extrémité supérieure engagée avec le premier flasque et une extrémité inférieure engagée avec le deuxième flasque (cette extrémité inférieure étant par exemple agencée au travers de l'ouverture du deuxième flasque), le tube interne étant obturé du côté de l'extrémité inférieure de l'élément filtrant et présentant des reliefs sur la face externe du tube interne en contact avec le média filtrant, un espace annulaire agencé entre la face externe du tube interne et ladite projection permettant une communication entre l'espace intérieur et le compartiment inférieur. Le tube interne permet de rigidifier l'élément filtrant et peut obturer partiellement l'accès par le bas à l'espace intérieur, ce qui permet de limiter le risque d'une remontée d'eau au travers du média filtrant.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en coupe illustrant un filtre selon un mode de réalisation préféré de l'invention ;
- la figure 2 représente une partie du filtre de la figure 1 ; et
- la figure 3 est une vue en coupe illustrant un élément filtrant propre à être utilisé dans le filtre à carburant de la figure 1.

Sur les différentes figures, les mêmes références désignent des éléments identiques ou similaires.

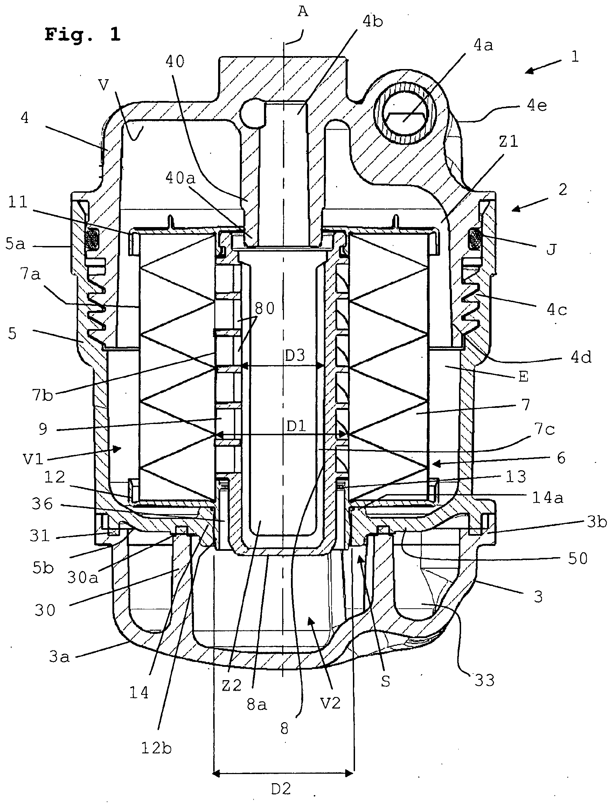

La figure 1 représente un mode de réalisation préféré du filtre à liquide (gazole ou carburant similaire) avec séparateur d'eau. Le liquide à filtrer sera appelé gazole dans ce qui suit, sans que ce soit limitatif.

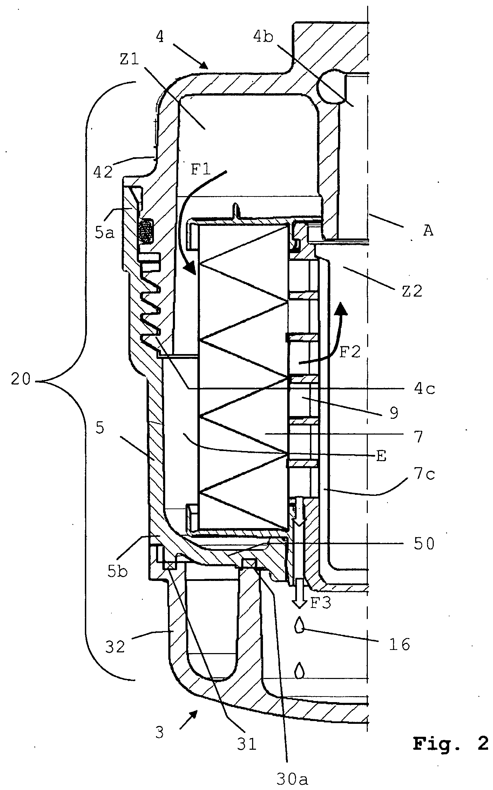

Le filtre 1 comprend un boîtier 2 qui présente une paroi supérieure et une paroi inférieure. Le boîtier 2 est raccordable de façon interchangeable à des conduites d'un système d'alimentation en carburant d'un véhicule à moteur à combustion. Comme cela est visible sur la figure 2, une paroi externe latérale 20 s'étend entre la paroi inférieure et la paroi supérieure.

Le boîtier 2 du filtre 1 peut présenter une forme sensiblement cylindrique de révolution autour d'un axe central. Dans l'exemple non limitatif des figures, la paroi inférieure du boîtier 2 est formée par une cuve 3 en métal ou en plastique. La paroi supérieure est formée par un couvercle 4 qui est relié de manière étanche à la cuve 3. Comme illustré sur la figure 1, ce couvercle 4 présente une entrée de carburant 4a ou autre liquide comparable à filtrer ainsi qu'une sortie de carburant 4b ou autre liquide filtré pour permettre la circulation et la filtration du carburant à l'intérieur du filtre 1 séparateur d'eau.

Comme cela est visible sur les figures 1 et 2, le boîtier 2 se décompose ici en trois pièces, réalisées de préférence en matière plastique rigide :
- la cuve 3 qui présente un fond 3a à partir duquel s'étend vers le haut une paroi annulaire 33, la cuve 3 formant un réservoir d'accumulation d'eau (la hauteur de la cuve 3 est par exemple supérieure à 10mm et de préférence dépasse 15 ou 20mm) ;
- un composant de boîtier 5, 50 qui s'étend autour de l'axe central entre des extrémités axiales ouvertes, respectivement supérieure 5a et inférieure 5b, le composant de boîtier 5, 50 comprenant une paroi latérale 5, de préférence cylindrique dans cet exemple non limitatif, et permettant de loger un élément filtrant 6 du filtre 1 ; et
- le couvercle 4 qui est fixé à la paroi latérale 5, au niveau de l'extrémité supérieure 5a ouverte du composant de boîtier 5, 50 pour permettre le remplacement de l'élément filtrant 6.

Dans l'exemple non limitatif de la figure 1, le couvercle 4 présente des moyens de fixation amovible permettant de fermer de manière étanche le boîtier 2. Ces moyens de fixation comportent de préférence un filetage 4c formé sur une portion inférieure 4d du couvercle 4. Un joint J peut être prévu à titre optionnel pour améliorer l'étanchéité entre le couvercle 4 et l'extrémité supérieure 5a de la paroi latérale 5. Le joint J peut constituer l'unique joint torique du filtre 1.

Ici le filetage 4c est agencé sur la face externe de la portion inférieure 4d et s'engage avec un filetage correspondant formé sur la face interne de l'extrémité supérieure 5a de la paroi latérale 5. On peut voir sur la figure 1 que le joint J peut être placé au dessus du filetage 4c et logé dans une gorge externe formée sur la périphérie de la portion inférieure 4d. L'entrée de carburant 4a et la sortie de carburant 4b sont ici situées dans une partie supérieure 4e du couvercle 4 qui recouvre l'ouverture de l'extrémité supérieure 5a.

En référence à la figure 2, une paroi externe latérale 20 du boîtier s'étend entre la paroi supérieure et la paroi inférieure formant le fond 3a. Cette paroi externe latérale 20 se décompose en trois tronçons comme suit :
- un tronçon supérieur défini par la paroi latérale 42 du couvercle 4,
- un tronçon intermédiaire défini par la paroi latérale 5 du composant de boîtier 5, 50, et
- un tronçon inférieur défini par la paroi latérale 32 de la cuve 3.

Tandis que le couvercle 4 peut être fixé de manière amovible au composant de boîtier 5, 50, il est prévu une liaison permanente entre la paroi latérale 32 de la cuve 3 et la paroi latérale 5. L'extrémité supérieure 3b de la cuve 3 est ainsi fixée à une cloison 50 en matière plastique qui prolonge la paroi latérale 5 du composant de boîtier 5, 50. La fixation peut être réalisée par soudure plastique. La cloison 50 vient ici de forme avec la paroi latérale 5 et s'étend transversalement dans le volume intérieur V du boîtier 2. Dans des variantes de réalisation de moindre préférence, la cloison 50 peut être emboîtée à force ou fixée autrement à l'intérieure de la paroi latérale 5.

Le boîtier 2 délimite un volume intérieur V dans lequel est disposé l'élément filtrant 6 qui est ici de forme annulaire. L'élément filtrant 6 présente un média filtrant 7, un tube interne 8, un premier flasque appelé dans ce qui suit flasque supérieur 11, un deuxième flasque appelé dans ce qui suit flasque inférieur 12. Dans des variantes de réalisation, l'un au moins des flasques 11, 12 peut être considéré comme optionnel et l'élément filtrant 6 est dans ce cas fixé différemment au boîtier 2. Le tube interne 8 rigidifie l'élément filtrant 6 et peut permettre de canaliser du carburant. Le tube interne 8 s'étend ici entre le flasque supérieur 11 et le flasque inférieur 12.

Le média filtrant 7 s'étend de préférence autour d'un axe central A qui peut être confondu avec l'axe central du boîtier ou éventuellement parallèle à celui-ci dans des variantes de réalisation. Dans l'exemple des figures 1 et 2, le média filtrant 7 s'étend autour de cet axe central A entre une extrémité supérieure et une extrémité inférieure, au dessus de la cloison 50. L'extrémité supérieure du média filtrant 7 est fixée de manière étanche au flasque supérieur 11 tandis que l'extrémité inférieure du média filtrant 7 est fixée de manière étanche au flasque inférieur 12.

Le média filtrant 7 présente une face externe 7a qui délimite avec le boîtier 2 un espace annulaire externe E. Le média filtrant 7 présente aussi une face interne 7b qui délimite un espace intérieur 9 creux. Le média filtrant 7 retient les impuretés notamment solides et a de préférence une fonction de coalesceur, de façon à séparer l'eau. Un élément de séparation d'eau 7c tel qu'une toile hydrophobe peut être prévu du côté de la face interne 7b pour permettre d'évacuer l'eau séparée dans l'espace intérieur 9. Le média filtrant 7 peut être d'un genre connu en soi et ne sera pas davantage décrit ici. Dans un mode de réalisation préféré, il peut aussi être prévu un élément de séparation d'eau 7c intégré dans le tube interne 8 (par exemple sous la forme d'une toile hydrophobe surmoulée sur la face interne du tube 8). Dans ce cas l'eau peut s'écouler dans l'espace entre le média filtrant 7 et la toile (cet espace est ici annulaire et délimité intérieurement par le diamètre interne D3 du tube 8). Des ouvertures radiales 80 formées sur le tube interne 8 permettent au carburant de s'écouler vers la zone en aval Z2 après avoir traversé l'élément de séparation d'eau 7c.

En référence aux figures 1 et 2, on peut voir que l'élément filtrant 6 présente une hauteur H inférieure ou égale à la hauteur de la paroi latérale 5. L'élément filtrant 6 est positionné dans le volume intérieur V à l'aide d'un support S de fixation qui maintient l'élément filtrant 6 à distance du fond 3a. Plus précisément, l'extrémité inférieure de l'élément filtrant 6, ici définie par le flasque inférieur 12 repose directement sur une face ou un rebord supérieur 14a du support S, ce rebord supérieur 14a étant distant de la paroi externe latérale 20 du boîtier 2.

Le support S est par exemple formé d'une seule pièce avec le composant de boîtier 5, 50 et définit l'extrémité axiale inférieure 5b. L'extrémité inférieure de l'élément filtrant 6 présente ici un organe mâle de fixation étanche qui s'étend axialement selon la direction de l'axe central A et s'engage au travers d'une ouverture de l'extrémité axiale inférieure 5b. Dans sa position de fixation, l'élément filtrant 6 partitionne le volume intérieur V entre une zone Z1 en amont du média filtrant 7 communiquant avec l'entrée 4a et une zone Z2 en aval du média filtrant 7 communiquant avec la sortie 4b.

On comprend que l'élément filtrant 6 peut être balayé dans la direction radiale, une fois orientée en position de montage suivant un axe vertical du véhicule, dans le boîtier 2. En référence à la figure 2, les flèches F1 et F2 montrent le sens de circulation du carburant dans le filtre 1, le carburant situé dans l'espace annulaire E traversant le média filtrant 7 pour atteindre l'espace intérieur 9.

Dans l'exemple représenté, le support S de fixation comporte la cloison 50 qui sépare le volume intérieur V en un compartiment inférieur V2 (essentiellement délimité par la cuve 3) et un compartiment supérieur V1 (délimité par le couvercle et la paroi latérale 5). De préférence afin de minimiser le nombre de pièces, le support S de fixation est constitué par la cloison 50. Alternativement ou en complément, le support S de fixation peut éventuellement aussi comporter au moins une pièce assemblée avec la cloison 50.

En référence à la figure 1, on peut voir que la cuve 3 est raccordée à la cloison 50 du composant de boîtier 5, 50 par au moins deux zones de soudure ou fixation analogue. Ainsi le support S de fixation qui s'étend transversalement à l'axe central A et à distance du fond 3a est raccordé à la cuve 3 par au moins un cordon de soudure interne 30a formé à l'extrémité supérieure d'un ou plusieurs piliers internes 30 venus de matière avec le fond 3a de la cuve 3. Dans des variantes de réalisation, le pilier interne 30 peut être formé intégralement avec la cloison 50 ou éventuellement se présenter sous la forme d'une pièce additionnelle fixé entre le fond 3a de la cuve 3 et la cloison 50.

Le pilier interne 30 de liaison entre le support S et le fond 3a peut être agencé entre la paroi annulaire 32 et un débouché inférieur du conduit central 14 et peut présenter une forme annulaire. Dans l'exemple de la figure 1, le pilier interne 30 s'étend autour de l'axe central A et à distance de la paroi annulaire 32, de façon à délimiter avec le boîtier 2 un espace annulaire 33.

Dans l'exemple de la figure 1, la cloison 50 présente en outre une zone périphérique de fixation avec la cuve 3, la fixation étant ici réalisée par une soudure 31 à l'extrémité supérieure 3b de la cuve 3. La double fixation est avantageuse pour rendre plus rigide la partie basse du boîtier 2 et limiter la fatigue liée aux pulsations de pression. Dans des variantes de réalisation, la fixation entre la cuve 3 et la cloison 50 peut être réalisée par une seule zone de soudure, par exemple sans soudure interne.

On comprend que la cloison 50 s'étend transversalement par rapport à la paroi externe latérale 20 du boîtier 2 et forme ainsi un fond du compartiment supérieur V1. La cloison 50 fait ici partie de l'extrémité inférieure 5a du composant de boîtier 5, 50. En raison de l'agencement de la cloison 50 en dessous du flasque inférieur 12 et d'une connexion étanche entre la cloison 50 et le flasque inférieur 12, seul l'espace intérieur 9 peut communiquer avec le compartiment inférieur V2 qui définit une zone d'accumulation d'eau. L'espace intérieur 9 débouche en effet en direction du fond 3a au travers d'une ouverture 15 du flasque inférieur 12. Ainsi, comme cela est visible sur la figure 2, l'espace intérieur 9 communique par son côté inférieur avec le compartiment inférieur V2 où l'eau peut s'accumuler (flèches F3 pour les gouttelettes 16 d'eau) et par son côté supérieur avec la sortie de carburant filtré 4b (flèche F2 pour le carburant propre).

Dans cet exemple, l'eau séparée par l'élément 7c et se présentant sous forme de gouttelettes 16 dans l'espace intérieur 9, tombe par gravité dans la cuve 3 au travers d'orifices 13 formés entre le flasque inférieur 12 et le tube interne 8. Le tube interne 8 peut présenter une extrémité inférieure 8a complètement obturée qui fait ici saillie en dehors de l'espace intérieur 9 au travers de l'ouverture 15 du flasque inférieur 12. La face d'obturation de l'extrémité inférieure 8a a un effet de barrière physique qui s'oppose à une remontée de l'eau vers la sortie 4b de carburant lors d'un bref à-coup pouvant se produire lors de la conduite d'un véhicule.

On peut voir que l'extrémité inférieure 8a s'étend au travers d'un conduit central 14 du support S de fixation qui s'étend de façon annulaire autour de l'axe central A. Ce conduit central 14 est ici cylindrique et forme une portion centrale de la cloison 50. Le conduit central 14 permet une communication fluidique entre l'espace intérieur 9 et le compartiment inférieur V2. Le conduit central 14 présente un diamètre interne D2 sensiblement égal au diamètre D1 de l'espace intérieur 9. Dans ce cas, le diamètre interne D1 du conduit central 14 ne dépasse pas de préférence la moitié du diamètre externe du flasque inférieur 12.

La fixation de l'élément filtrant 6 dans le boîtier 2 est obtenue par un engagement d'une projection annulaire 12b saillante du flasque inférieur 12 dans le conduit central 14 du support S. La projection annulaire 12b est ici cylindrique et fait saillie axialement depuis la portion radiale 12a vers le fond 3a. Dans un mode de réalisation préféré, la portion radiale 12a du flasque inférieur 12 est sensiblement plane et recouvre une extrémité axiale inférieure du média filtrant 7. La projection annulaire 12b en saillie vers le fond 3a peut être prolongée par une projection annulaire 12c en saillie axialement dans l'espace intérieur 9 et s'étendant le long de l'extrémité axiale inférieure du média filtrant 7 pour maintenir ce dernier.

Comme cela est visible sur la figure 1, lorsque la projection annulaire 12b est engagée de façon serrée dans le conduit central 14 du support S (fixation emmanché serré), la portion radiale 12a du flasque inférieur 12 vient buter sur un bord supérieur 14a annulaire du conduit 14. Ce bord supérieur 14a est formé sur une projection annulaire qui fait saillie vers le haut par rapport à une portion radiale de la cloison 50 parallèle au flasque inférieur 12. Le conduit 14 présente également un bord inférieur 14b qui fait saillie vers le bas par rapport à la portion radiale. Dans l'exemple représenté, le bord supérieur 14a est relativement étroit pour économiser de la matière et forme l'unique surface d'appui axial de l'élément filtrant 6 sur le composant de boîtier 5, 50. Le bord supérieur 14a s'étend ainsi radialement en deçà de la zone annulaire définie par la fixation avec le pilier interne 30. Cependant il peut aussi être prévu une ou des autre(s) surface(s) d'appui axial du support S de fixation, ou encore un rebord supérieur 14a plus large.

Le flasque inférieur 12 et la paroi latérale 5 sont de préférence en plastique, le contact d'étanchéité étant dans ce cas de type plastique-plastique. La projection annulaire 12b définit un raccord tubulaire et l'étanchéité avec la face interne du conduit central 14 de la cloison 50 peut être obtenue par un bourrelet annulaire B formé sur la surface annulaire externe de la projection annulaire 12b.

Bien que l'exemple représenté montre un contact annulaire d'étanchéité entre le flasque inférieur 12 et le conduit central 14, il doit être compris qu'un tel contact d'étanchéité peut aussi être réalisé en utilisant l'extrémité inférieure 8a du tube interne 8 ou plus généralement toute surface appropriée, de préférence tubulaire, de l'extrémité inférieure de l'élément filtrant 6.

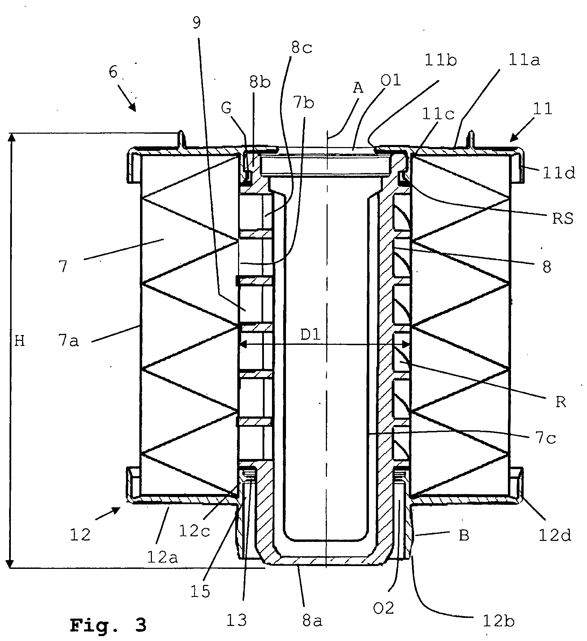

L'élément filtrant 6 formant cartouche filtrante va à présent être décrit plus particulièrement en liaison avec les figures 1 et 3.

En référence à la figure 3, l'élément filtrant 6 forme une unité amovible adaptée pour être insérée à l'intérieur du composant de boîtier 5, 50 en étant engagé dans le support de fixation S comme décrit ci-dessus. Dans cet exemple non limitatif, le flasque supérieur 11 présente une portion radiale 11a sensiblement plane et qui s'étend autour d'une ouverture centrale O1 du flasque supérieur 11. Un bord interne 11b du flasque supérieur 11 délimite cette ouverture centrale O1.

On peut voir sur la figure 1, dans la position de montage de l'élément filtrant 6, que le bord interne 11b du flasque supérieur 11 est en prise avec un organe mâle tubulaire 40 interne du couvercle 4 qui s'étend autour de l'axe central A. L'extrémité libre 40a de l'organe mâle est en contact étanche annulaire avec le bord interne 11b et fait légèrement saillie dans l'espace intérieur 9 lorsque le couvercle 4 est entièrement vissé ou fixé d'une autre façon sur le composant de boîtier 5, 50.

La conception du flasque supérieur 11 est avantageuse en ce qu'elle permet d'éviter d'intégrer dans l'élément filtrant 6 des joints additionnels pour partitionner l'espace situé entre le flasque supérieur 11 et le couvercle 4. Autrement dit, le flasque supérieur 11 cumule une fonction de maintien du média filtrant 7 et d'assemblage avec le couvercle 4.

Ici, les surfaces d'étanchéité de l'élément filtrant 6 sont réalisées par les flasques supérieur 11 et inférieur 12, du côté intérieur pour le flasque supérieur 11 et du côté extérieur (mais également à proximité du tube interne 8) pour le flasque inférieur 12. Cette disposition permet de rendre l'élément filtrant 6 plus compact et protège mieux les surfaces d'étanchéité.

Comme cela est visible sur la figure 3, le média filtrant 7 est disposé autour du tube interne 8 qui forme une structure de maintien du média filtrant 7. Le tube interne 8 présente sur sa face externe des reliefs R en contact avec la face interne 7b du média filtrant 7. Plusieurs ouvertures 8c latérales sont prévues sur ce tube interne 8 pour permettre la circulation du carburant propre. Ce tube interne 8 s'étend entre son extrémité inférieure 8a engagée avec le flasque inférieur 12 et une extrémité supérieure 8b engagée avec le flasque supérieur 11.

Dans un mode de réalisation préféré, le flasque supérieur 11 et le flasque inférieur 12 sont de préférence des pièces moulées à partir d'une matière plastique. Chacun des flasques 11, 12 comprend :
- une portion radiale 11a, respectivement 12a, qui s'étend perpendiculairement à l'axe central A du média filtrant 7, entre un bord interne et un bord externe ;
- une portion tubulaire interne 11c, respectivement 12c qui s'étend le long de l'extrémité axiale correspondante du média filtrant 7, depuis le bord interne de la portion radiale ; et
- une portion tubulaire externe 11d, respectivement 12d, qui s'étend le long ou à proximité de l'extrémité axiale correspondante du média filtrant 7, depuis le bord externe de la portion radiale 11a, respectivement 12a.

Dans l'exemple de la figure 3, la portion tubulaire interne 11c du flasque supérieur 11 comprend un relief RS saillant vers l'intérieur, de préférence annulaire, permettant de maintenir en position le tube interne 8 par engagement dans une gorge G correspondante formée dans l'extrémité supérieure 8b du tube interne 8. On comprend que cette disposition peut permettre de clipser le tube interne 8 sur le flasque supérieur 11.

La portion tubulaire interne 12c peut éventuellement venir en appui sur le tube interne 8 pour faciliter le centrage du tube interne 8 dans le média filtrant 7 et supprimer le cas échéant le jeu axial du tube interne 8 par rapport au reste de l'élément filtrant 6. Dans un mode de réalisation préféré, le tube interne 8 peut être clipsé sur le flasque inférieur 12. L'extrémité inférieure 8a du tube interne 8 présente une section inférieure à la section de l'ouverture 02 définie par le flasque inférieur 12, de sorte qu'il existe un espace annulaire 36 entre la face externe de l'extrémité inférieure 8a du tube interne 8 et la projection saillante 12b. Cet espace annulaire 36 permet, en association avec les orifices 13, une communication entre l'espace intérieur 9 et le compartiment inférieur V2.

Les reliefs R du tube interne 8 peuvent comporter des portions hélicoïdales ou ailettes qui s'étendent à la manière d'un filetage autour de l'axe central A depuis l'extrémité supérieure 8b de forme annulaire jusqu'à l'extrémité inférieure 8a, également de forme annulaire. Cette géométrie permet de maintenir efficacement, de manière annulaire, le média filtrant 7 tout en permettant à l'eau séparée du média filtrant 7 de s'écouler de manière gravitaire pour rejoindre le compartiment inférieur V2, par l'intermédiaire de l'ouverture 02. Les ailettes forment en outre une barrière physique qui s'oppose à une remontée verticale de l'eau vers la sortie 4b de carburant lors d'un bref à-coup pouvant se produire lors de la conduite d'un véhicule. Bien entendu, d'autres formes peuvent être utilisées pour ce tube interne 8.

Parmi les avantages de l'agencement du filtre 1 selon l'invention, on peut noter la possibilité d'allonger la durée de vie moyenne de la partie inférieure du filtre 1 et/ou de réduire l'épaisseur et l'encombrement externe de composants du boîtier, du fait que la cuve 3 résiste mieux aux pulsations en pression.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que l'entrée de carburant brut 4a et la sortie de carburant filtré 4b soient ici prévues dans le couvercle 4, d'autres agencements peuvent être utilisés, par exemple avec une entrée et éventuellement une sortie formée (s) dans la paroi latérale 5, à distance du fond 3a de la cuve 3. Plus généralement, les zones d'étanchéité entre l'élément filtrant 6 et le boîtier 2 pour isoler la zone en amont Z1 par rapport à la zone en aval Z2 peuvent se présenter sous différentes formes.

## Revendications

1. Filtre à carburant (1) séparateur d'eau, comportant :
- un boîtier (2) comprenant une paroi supérieure, une paroi inférieure présentant un fond (3a), le boîtier (2) délimitant un volume intérieur (V) et présentant une entrée de carburant brut (4a) et une sortie de carburant filtré (4b) ;
- un élément filtrant (6) disposé dans un compartiment supérieur (V1) du volume intérieur (V), l'élément filtrant (6) comportant une extrémité supérieure, une extrémité inférieure et un média filtrant (7) sensiblement annulaire s'étendant autour d'un axe central (A) entre l'extrémité supérieure et l'extrémité inférieure, le média filtrant (7) ayant une face interne (7b) qui délimite un espace intérieur (9) ;
- un support (S) de fixation de l'élément filtrant (6), comportant une cloison (50) solidaire du boîtier (2), ledit support (S) s'étendant à distance du fond (3a), de sorte à ménager un compartiment inférieur (V2) du volume intérieur (V) dans lequel de l'eau séparée peut s'accumuler, la cloison (50) permettant de délimiter le compartiment inférieur (V2) par rapport au compartiment supérieur (V1) ; et
- un élément de séparation d'eau tel qu'une toile hydrophobe, prévu du côté de ladite face interne (7b) ou sur un tube interne (8) de l'élément filtrant (6) et permettant de séparer l'eau dans l'espace intérieur, l'espace intérieur (9) communiquant d'une part, du côté de l'extrémité inférieure de l'élément filtrant (6), avec le compartiment inférieur, et communiquant d'autre part, du côté de l'extrémité supérieure de l'élément filtrant (6), avec la sortie de carburant filtré (4b) ;
**caractérisé en ce que** la cloison (50), intégralement formée avec une pièce du boîtier (2) distincte de la paroi inférieure, comprend un conduit central (14) de communication entre ledit espace intérieur (9) et le compartiment inférieur (V2), l'extrémité inférieure de l'élément filtrant (6) étant raccordée de manière étanche audit support (S) par un contact annulaire radial avec ledit conduit central (14) de la cloison (50).

2. Filtre selon la revendication 1, dans lequel le boîtier (2) comporte un pilier interne (30) de liaison entre ledit support (S) et le fond (3a), qui s'étend de façon annulaire dans le volume intérieur (V) autour de l'axe central (A), de façon à délimiter un espace annulaire (33) entre le boîtier (2) et une face externe du pilier interne.

3. Filtre selon l'une quelconque des revendications précédentes, comprenant une cuve (3) formant réservoir d'accumulation d'eau et un couvercle (4), ladite paroi supérieure appartenant au couvercle (4), l'entrée (4a) et la sortie (4b) étant formées dans le couvercle (4).

4. Filtre selon la revendication 3, dans lequel le boîtier (2) comporte :
- ladite cuve (3) qui présente ledit fond (3a) et une paroi annulaire (3b) qui s'étend vers le haut depuis le fond (3a), le compartiment inférieur (V2) étant délimité entre le fond (3a) et la cloison (50) ;
- un composant de boîtier (5, 50) qui s'étend autour de l'axe central (A) entre des extrémités axiales ouvertes, respectivement supérieure (5a) et inférieure (5b), ledit support (S) de fixation de l'élément filtrant (6) étant formée d'une seule pièce avec le composant de boîtier (5, 50) et définissant ladite extrémité axiale ouverte inférieure (5b) ; et
- un couvercle (4) qui est fixé à l'extrémité supérieure (5a) ouverte du composant de boîtier (5, 50).

5. Filtre selon l'une quelconque des revendications précédentes, dans lequel l'élément filtrant (6) est fixé de manière amovible dans le boîtier (2), le boîtier comprenant un couvercle (4) qui présente des moyens de fixation amovible permettant de fermer de manière étanche le boîtier (2), les moyens de fixation présentant de préférence un filetage (4c) formé sur une portion inférieure (4d) du couvercle (4).

6. Filtre selon l'une quelconque des revendications précédentes, dans lequel l'extrémité inférieure de l'élément filtrant (6) présente une portion tubulaire d'étanchéité en contact étanche annulaire radial avec une face interne du conduit central (14) de la cloison (50).

7. Filtre selon l'une quelconque des revendications précédentes, dans lequel l'extrémité supérieure de l'élément filtrant (6) est constituée par un premier flasque (11) et l'extrémité inférieure de l'élément filtrant (6) est constituée par un deuxième flasque (12), le média filtrant (7) étant disposé entre le premier flasque (11) et le deuxième flasque (12).

8. Filtre selon la revendication 7, dans lequel l'espace intérieur (9) débouche en direction du fond (3a) au travers d'une ouverture du deuxième flasque (12).

9. Filtre selon la revendication 7 ou 8, dans lequel le deuxième flasque (12) comporte une portion radiale (12a) qui recouvre une extrémité inférieure du média filtrant (7) et une projection annulaire (12b) qui fait saillie axialement vers le fond (3a) et s'engage de façon serrée dans le conduit central (14) de la cloison (50) .

10. Elément filtrant (6) formant cartouche filtrante, adapté pour coopérer dans un filtre à carburant (1) selon l'une quelconque des revendications 1 à 9, comprenant une extrémité supérieure sous la forme d'un premier flasque (11), une extrémité inférieure sous la forme d'un deuxième flasque (12), un média filtrant (7) sensiblement annulaire s'étendant autour d'un axe central (A) entre le premier flasque (11) et le deuxième flasque (12), le média filtrant (7) ayant une face interne (7b) qui délimite un espace intérieur (9), **caractérisé en ce qu'**il comporte un élément de séparation d'eau (7c) tel qu'une toile hydrophobe prévu du côté de ladite face interne (7b) ou sur un tube interne (8) de l'élément filtrant (6) pour permettre de séparer l'eau du carburant à proximité de l'axe central (A), le deuxième flasque (12) comprenant une ouverture formant un débouché inférieur de l'espace intérieur (9) pour permettre un écoulement de l'eau séparée vers un compartiment inférieur (V2) et le premier flasque (11) comprenant une ouverture (O1) formant un débouché supérieur de l'espace intérieur (9) pour permettre d'évacuer le carburant filtré ;
**et en ce que** le deuxième flasque (12) présente une portion radiale (12a) et une projection (12b) définissant un raccord tubulaire, le raccord tubulaire présentant une face externe sur laquelle un bourrelet annulaire (B) fait saillie radialement vers l'extérieur pour réaliser un contact étanche avec un conduit central (14) d'une cloison (50) .

11. Elément filtrant (6) selon la revendication 10, dans lequel la projection (12b) définissant le raccord tubulaire est généralement cylindrique et fait saillie vers le bas depuis un bord interne de la portion radiale (12a) .

12. Elément filtrant (6) selon la revendication 10 ou 11, comprenant un tube interne (8) qui s'étend entre une extrémité supérieure engagée avec le premier flasque (11) et une extrémité inférieure engagée avec le deuxième flasque (12), le tube interne (8) étant obturé du côté de l'extrémité inférieure de l'élément filtrant (6) et présentant des reliefs sur la face externe du tube interne (8) en contact avec le média filtrant (7), un espace annulaire (36) agencé entre la face externe du tube interne (8) et ladite projection permettant une communication entre l'espace intérieur (9) et le compartiment inférieur (V2).

## Patentansprüche

1. Wasser abscheidender Kraftstofffilter (1), der Folgendes umfasst:
- ein Gehäuse (2), das eine obere Wand, eine untere Wand, die einen Boden (3a) aufweist, umfasst, wobei das Gehäuse (2) ein Innenvolumen (V) begrenzt und einen Eingang für Rohkraftstoff (4a) und einen Ausgang für gefilterten Kraftstoff (4b) aufweist;
- ein Filterelement (6), das in einem oberen Kasten (V1) des Innenvolumens (V) angeordnet ist, wobei das Filterelement (6) ein oberes Ende, ein unteres Ende und ein im Wesentlichen ringförmiges Filtermedium (7), das sich um eine Mittelachse (A) zwischen dem oberen Ende und dem unteren Ende erstreckt, wobei das Filtermedium (7) eine einen Innenraum (9) begrenzende Innenfläche (7b) umfasst, umfasst;
- einen Träger (S) zur Befestigung des Filterelements (6), der eine mit dem Gehäuse (2) fest verbundene Trennwand (50) umfasst, wobei sich der Träger (S) in einem Abstand zum Boden (3a) erstreckt, so dass ein unterer Kasten (V2) des Innenvolumens (V), in dem das abgeschiedene Wasser aufgefangen werden kann, ausgebildet wird, wobei die Trennwand (50) eine Abgrenzung des unteren Kastens (V2) vom oberen Kasten (V1) gestattet; und
- ein Wasserabscheideelement, wie einen hydrophoben Stoff, das auf der Seite der Innenfläche (7b) oder an einem Innenrohr (8) des Filterelements (6) vorgesehen ist und die Abscheidung von Wasser in den Innenraum gestattet, wobei der Innenraum (9) einerseits, auf der Seite des unteren Endes des Filterelements (6), mit dem unteren Kasten in Verbindung steht und andererseits, auf der Seite des oberen Endes des Filterelements (6), mit dem Ausgang für gefilterten Kraftstoff (4b) in Verbindung steht;
**dadurch gekennzeichnet, dass** die Trennwand (50), die mit einem von der unteren Wand unterschiedlichen Teil des Gehäuses (2) integral ausgebildet ist, eine zentrale Leitung (14) zur Verbindung zwischen dem Innenraum (9) und dem unteren Kasten (V2) umfasst, wobei das untere Ende des Filterelements (6) durch einen radialen ringförmigen Kontakt mit der zentralen Leitung (14) der Trennwand (50) mit dem Träger (S) dicht verbunden ist.

2. Filter nach Anspruch 1, wobei das Gehäuse (2) eine Innenstütze (30) zur Verbindung zwischen dem Träger (S) und dem Boden (3a), die sich ringförmig in dem Innenvolumen (V) um die Mittelachse (A) erstreckt, so dass ein ringförmiger Raum (33) zwischen dem Gehäuse (2) und einer Außenfläche der Innenstütze begrenzt wird, umfasst.

3. Filter nach einem der vorhergehenden Ansprüche, der eine Wanne (3), die einen Wasserauffangbehälter bildet, und einen Deckel (4) umfasst, wobei die obere Wand zum Deckel (4) gehört, wobei der Eingang (4a) und der Ausgang (4b) in dem Deckel (4) ausgebildet sind.

4. Filter nach Anspruch 3, wobei das Gehäuse (2) Folgendes umfasst:
- die Wanne (3), die den Boden (3a) und eine ringförmige Wand (3b), die sich vom Boden (3a) nach oben erstreckt, aufweist, wobei der untere Kasten (V2) zwischen dem Boden (3a) und der Trennwand (50) begrenzt ist;
- einen Gehäuseteil (5, 50), der sich um die Mittelachse (A) zwischen den offenen axialen Enden, bzw. dem oberen (5a) und dem unteren (5b), erstreckt, wobei der Träger (S) zur Befestigung des Filterelements (6) mit dem Gehäuseteil (5, 50) einstückig ausgebildet ist und das untere offene axiale Ende (5b) definiert; und
- einen Deckel (4), der am oberen offenen Ende (5a) des Gehäuseteils (5, 50) befestigt ist.

5. Filter nach einem der vorhergehenden Ansprüche, wobei das Filterelement (6) abnehmbar im Gehäuse (2) befestigt ist, wobei das Gehäuse einen Deckel (4) umfasst, der Mittel zur lösbaren Befestigung aufweist, die ein dichtes Schließen des Gehäuses (2) gestatten, wobei die Befestigungsmittel vorzugsweise ein an einem unteren Teil (4d) des Deckels (4) ausgebildetes Gewinde (4c) aufweisen.

6. Filter nach einem der vorhergehenden Ansprüche, wobei das untere Ende des Filterelements (6) einen rohrförmigen Dichtabschnitt im radialen ringförmigen Dichtkontakt mit einer Innenfläche der zentralen Leitung (14) der Trennwand (50) aufweist.

7. Filter nach einem der vorhergehenden Ansprüche, wobei das obere Ende des Filterelements (6) aus einem ersten Flansch (11) besteht und das untere Ende des Filterelements (6) aus einem zweiten Flansch (12) besteht, wobei das Filtermedium (7) zwischen dem ersten Flansch (11) und dem zweiten Flansch (12) angeordnet ist.

8. Filter nach Anspruch 7, wobei der Innenraum (9) in Richtung des Bodens (3a) durch einen Durchgang des zweiten Flanschs (12) führt.

9. Filter nach Anspruch 7 oder 8, wobei der zweite Flansch (12) einen radialen Abschnitt (12a), der ein unteres Ende des Filtermediums (7) abdeckt, und einen ringförmigen Vorsprung (12b), der vom Boden (3a) axial vorsteht und in der zentralen Leitung (14) der Trennwand (50) in Klemmeingriff steht, umfasst.

10. Filterelement (6), das einen Filtereinsatz bildet, das zum Zusammenwirken in einem Kraftstofffilter (1) nach einem der Ansprüche 1-9 ausgeführt ist, das ein oberes Ende in Form eines ersten Flanschs (11), ein unteres Ende in Form eines zweiten Flanschs (12), ein im Wesentlichen ringförmiges Filtermedium (7), das sich um eine Mittelachse (A) zwischen dem ersten Flansch (11) und dem zweiten Flansch (12) erstreckt, wobei das Filtermedium (7) eine einen Innenraum (9) begrenzende Innenfläche (7b) umfasst, umfasst;
**dadurch gekennzeichnet, dass** es ein Wasserabscheideelement (7c), wie einen hydrophoben Stoff, umfasst, das auf der Seite der Innenfläche (7b) oder an einem Innenrohr (8) des Filterelements (6) vorgesehen ist, um eine Abscheidung von Wasser aus dem Kraftstoff in der Nähe der Mittelachse (A) zu gestatten, wobei der zweite Flansch (12) einen Durchgang umfasst, der eine untere Öffnung des Innenraums (9) bildet, um ein Fließen des abgeschiedenen Wassers zu einem unteren Kasten (V2) zu gestatten, und wobei der erste Flansch (11) einen Durchgang (O1) umfasst, der eine obere Öffnung des Innenraums (9) bildet, um ein Austreten des gefilterten Kraftstoffs zu gestatten;
**und dass** der zweite Flansch (12) einen radialen Abschnitt (12a) und einen Vorsprung (12b), der einen Rohrverbindungsteil definiert, aufweist, wobei der Rohrverbindungsteil eine Außenfläche aufweist, auf der ein ringwulst (B) radial nach außen vorsteht, um einen Dichtkontakt mit einer zentralen Leitung (14) einer Trennwand (50) zu realisieren.

11. Filterelement (6) nach Anspruch 10, wobei der den Rohrverbindungsteil definierende Vorsprung (12b) allgemein zylindrisch ist und von einem inneren Rand des radialen Abschnitts (12a) nach unten vorsteht.

12. Filterelement (6) nach Anspruch 10 oder 11, das ein Innenrohr (8) umfasst, das sich zwischen einem mit dem ersten Flansch (11) in Eingriff stehenden oberen Ende und einem mit dem zweiten Flansch (12) in Eingriff stehenden unteren Ende erstreckt, wobei das Innenrohr (8) auf der Seite des unteren Endes des Filterelements (6) verschlossen ist und auf der Außenfläche des Innenrohrs (8) im Kontakt mit dem Filtermedium (7) Strukturierungen aufweist, wobei ein ringförmiger Raum (36), der zwischen der Außenfläche des Innenrohrs (8) und dem Vorsprung angeordnet ist, eine Verbindung zwischen dem Innenraum (9) und dem unteren Kasten (V2) gestattet.

## Claims

1. Water-separating fuel filter (1) comprising:
- a housing (2) including an upper wall, a lower wall having a bottom (3a), the housing (2) defining an inner volume (V) and having a crude fuel inlet (4a) and a filtered fuel outlet (4b);
- a filter element (6) placed in a top compartment (V1) of the inner volume (V), the filter element (6) comprising an upper end, a lower end and a substantially annular filter medium (7) extending about a central axis (A) between the upper end and the lower end, the filter medium (7) having an inner surface (7b) defining an inner space (9);
- a support (S) for fixing the filter element (6) comprising a partition (50) secured to the housing (2), said support (S) extending away from the bottom (3a), so as to allow for a bottom compartment (V2) of the inner volume (V) wherein the separated water can collect, the partition (50) defining the bottom compartment (V2) in relation to the top compartment (VI); and
- a water-separating element such as hydrophobic fabric, provided on the side nearest said inner surface (7b) or on an inner tube (8) of the filter element (6) and designed to separate the water in the inner space, the inner space (9) communicating, on the one hand on the side nearest the lower end of the filter element (6), with the bottom compartment, and communicating on the other hand on the side nearest the upper end of the filter element (6), with the filtered fuel outlet (4b);
**characterised in that** the partition (50), which is formed in one piece with a part of the housing (2) separate from the lower wall, includes a central duct (14) for communication between said inner space (9) and the bottom compartment (V2), whereby the lower end of the filter element (6) is connected in a sealed manner to said support (S) by a radial annular contact with said central duct (14) of the partition (50).

2. Filter according to claim 1, wherein the housing (2) comprises an inner linking pillar (30) between said support (S) and the bottom (3a), which extends in an annular manner within the inner volume (V) about the central axis (A), so as to define an annular space (33) between the housing (2) and an outer surface of the inner pillar.

3. Filter according to any one of the previous claims, comprising a vessel (3) forming a water collection reservoir and a lid (4), whereby said upper wall belongs to the lid (4), and the inlet (4a) and the outlet (4b) are formed within the lid (4).

4. Filter according to claim 3, wherein the housing (2) comprises:
- said vessel (3), which has said bottom (3a) and an annular wall (3b) which extends upwards from the bottom (3a), the bottom compartment (V2) being defined between the bottom (3a) and the partition (50);
- a housing component (5, 50) which extends about the central axis (A) between respectively upper (5a) and lower (5b) open axial ends, said support (S) for fixing the filter element (6) being formed in a single piece with the housing component (5, 50) and defining said lower open axial end (5b); and
- a lid (4) which is fixed to the open upper end (5a) of the housing component (5, 50).

5. Filter according to any one of the previous claims, wherein the filter element (6) is fixed in a removable manner inside the housing (2), whereby the housing comprises a lid (4) which has removable fixing means designed to close and seal the housing (2), the fixing means preferably having a thread (4c) formed on a lower portion (4d) of the lid (4).

6. Filter according to any one of the previous claims, wherein the lower end of the filter element (6) has a tubular sealing portion forming a sealed radial annular contact with an inner surface of the central duct (14) of the partition (50).

7. Filter according to any one of the previous claims, wherein the upper end of the filter element (6) is made from a first flange (11) and the lower end of the filer element (6) is made from a second flange (12), whereby the filter medium (7) is positioned between the first flange (11) and the second flange (12).

8. Filter according to claim 7, wherein the inner space (9) opens out towards the bottom (3a) through an opening in the second flange (12).

9. Filter according to claim 7 or 8, wherein the second flange (12) comprises a radial portion (12a) which covers a lower end of the filter medium (7) and an annular protrusion (12b) which protrudes axially towards the bottom (3a) and engages in a tightened manner inside the central duct (14) of the partition (50).

10. Filter element (6) forming a filter cartridge, designed to engage in a fuel filter (1) according to any one of claims 1 to 9, comprising an upper end in the form of a first flange (11), a lower end in the form of a second flange (12), a filter medium (7) substantially annular and extending about a central axis (A) between the first flange (11) and the second flange (12), the filter medium (7) having an inner surface (7b) defining an inner space (9), **characterised in that** it comprises a water-separating element (7c) such as hydrophobic fabric, provided on the side nearest said inner surface (7b) or on an inner tube (8) of the filter element (6) in order to separate the water from the fuel near the central axis (A), the second flange (12) comprising an opening forming a lower outlet of the inner space (9) to enable the separated water to flow towards a bottom compartment (V2) and the first flange (11) comprising an opening (O1) forming an upper outlet of the inner space (9) to enable the removal of the filtered fuel;
and **in that** the second flange (12) has a radial portion (12a) and a protrusion (12b) defining a tubular connection, the tubular connection having an outer surface on which an annular ridge (B) radially protrudes outwards to produce a sealed contact with a central duct (14) of a partition (50).

11. Filter element (6) according to claim 10, wherein the protrusion (12b) defining the tubular connection is generally cylindrical and protrudes downwards from an inner edge of the radial portion (12a).

12. Filter element (6) according to claim 10 or 11, comprising an inner tube (8) which extends between an upper end engaged with the first flange (11) and a lower end engaged with the second flange (12), the inner tube (8) being closed on the side nearest the lower end of the filter element (6) and having raised areas on the outer surface of the inner tube (8) in contact with the filter medium (7), an annular space (36) arranged between the outer surface of the inner tube (8) and said protrusion enabling communication between the inner space (9) and the bottom compartment (V2).
